# EUROPÄISCHE PATENTSCHRIFT

(11) **EP 3 927 994 B1**
(45) Veröffentlichungstag und Bekanntmachung des Hinweises auf die Patenterteilung: **07.06.2023**
(21) Anmeldenummer: 20706176.3
(22) Anmeldetag: 14.02.2020
(51) Int. Cl.: F16F 3/087, A63G 11/00, F16F 7/00

(54) **WIPPENDÄMPFER**
ROCKER DAMPER
AMORTISSEUR À BASCULE

(30) Priorität: 18.02.2019 DE 102019104031
(43) Veröffentlichungstag der Anmeldung: 29.12.2021
(73) Patentinhaber: Conradi + Kaiser GmbH, 56271 Kleinmaischeid (DE)
(72) Erfinder: KAISER, Klaus, verstorben (DE)
(74) Vertreter: Braun-Dullaeus Pannen Emmerling Patent- & Rechtsanwaltspartnerschaft mbB
(86) Internationale Anmeldenummer: PCT/EP2020/053986
(87) Internationale Veröffentlichungsnummer: WO 2020/169490

(56) Entgegenhaltungen:
- CH-A- 421 422
- CN-A- 108 579 097
- CN-U- 202 283 414
- FR-A- 908 022
- US-A- 4 641 835

## Beschreibung

Die Erfindung betrifft einen Wippendämpfer, aufweisend einen Sockel und ein erstes Elastomer-Band, wobei das erste Elastomerband an dem Sockel befestigt ist, wobei das erste Elastomerband in Längsrichtung gekrümmt verläuft, so dass es einen vom Sockel abstehenden ersten Kontaktbereich ausbildet.

Wippendämpfer werden eingesetzt, um den Stoß abzuwenden, der ansonsten beim Aufschlagen der Wippen-Enden am Untergrund respektive an einem die Bewegung der Wippe begrenzenden Anschlag entstehen würde. Ohne die Verwendung von Wippendämpfern könnten die Wirbelsäulen der eine Wippe nutzenden Kinder aufgrund der stoßartigen Belastung geschädigt werden. Eine Dämpfung im Sinne der Anmeldung ist eine Reduzierung der Geschwindigkeit des Wippen-Auslegers vor dem Aufschlagen der Wippen-Enden, nicht jedoch ein über die gesamte Wegstrecke der Wippenbewegung wirkender Widerstand.

Ein derartiger Wippendämpfer ist über einen Sockel respektive ein Verbindungselement entweder mit der Wippe oder mit dem Boden fest verbunden. Er ist so positioniert, dass er zwischen dem Wippen-Ende und dem Untergrund angeordnet ist und einen direkten Kontakt der Wippen-Enden mit dem Untergrund verhindert. Als für die Dämpfung geeignetes Material wird aufgrund seiner gummielastischen Eigenschaften üblicherweise ein Elastomer verwendet.

Besonders bewährt hat sich die Ausbildung des Wippen-Dämpfers als zumindest in Teilbereichen gekrümmt verlaufendes Elastomerband, welches von dem Sockel absteht. Auf diese Weise wird in der unbelasteten Ausgangsposition des Wippendämpfers zwischen dem Elastomerband und dem Sockel ein Hohlraum gebildet, der für die reversible Verformung des Elastomerbandes zur Verfügung steht. Ein derartiger Wippendämpfer wird von der CH 421 422 A gezeigt. Bei der Dämpfung eines Stoßes verringert sich in einem ersten Schritt die Krümmung des Elastomerbandes im Kontaktbereich. Der Kontaktbereich des Elastomerbandes verformt sich dabei und wird in den Hohlraum hinein gedrückt. Reicht diese Verformung zur Dämpfung des Stoßes noch nicht aus, geht die Krümmung des Kontaktbereiches weiter gegen null und kehrt sich anschließend um. Das Elastomerband bildet dann im Kontaktbereich erneut eine Krümmung aus, nun aber mit entgegengesetzten Vorzeichen. Dabei steigt die Dämpfwirkung mit zunehmender Verformung des Elastomerbandes an.

Wichtige Faktoren der Dämpfung sind die Elastizität des Elastomerbandes und der zur Verfügung stehenden Verformungsweg. Werden diese richtig auf die an den Wippen-Enden zu erwartenden maximale Stoß-Stärke eingestellt, kann ein Durchschlagen des Kontaktbereichs auf den Sockel verhindert werden.

Nach erfolgter Dämpfung, also wenn die Wippe ihre Bewegungsrichtung umkehrt, erfolgt eine Rückverformung des Elastomerbandes in die unbelastete Position, in der es für eine neue Dämpfung zur Verfügung steht.

Grundsätzlich ist ein solches Elastomerband in der Lage, eine sehr große Anzahl von Wipp-Bewegung zu dämpfen. Jedoch kann die wiederkehrende Umkehr der Krümmung auf Dauer zu einer von der Oberfläche des Elastomerbandes ausgehenden Rissbildung führen. Hierdurch verliert es in zunehmenden Maße seine Dämpfungswirkung und muss schlussendlich ausgetauscht werden.

Aus dem US 4 641 835 A ist ein Sitzpolster bekannt, welches ein in Axialrichtung aufgetrenntes PVC-Rohr aufweist, dessen von einander beabstandeten Enden in einen Holm eingesetzt sind. In den Hohlraum wischen dem aufgetrennten PVC-Rohr und dem Holm ist ein weiteres PVC-Rohr eingesetzt.

Diese Anmeldung stellt sich die Aufgabe, einen Wippendämpfer vorzuschlagen, der im Vergleich zu den bekannten Wippendämpfern eine erhöhte Standzeit hat.

Diese Aufgabe wird durch einen Wippendämpfer mit den Merkmalen des Anspruchs 1 gelöst. Hierzu wird vorgeschlagen, einen gattungsgemäßen Wippendämpfer so auszubilden, dass am Sockel ein zweites Elastomerband befestigt ist, welches in Längsrichtung gekrümmt verläuft, so dass es einen vom Sockel abstehenden zweiten Kontaktbereich ausbildet, wobei das erste Elastomerband das zweite Elastomerband umläuft. Ein wesentlicher Grundgedanke der Erfindung ist es somit, die Dämpfungswirkung des ersten Elastomerbandes durch ein zweites Elastomerband zu unterstützen, welches in einem vom ersten Elastomerband umlaufenden Hohlraum angeordnet ist. Drückt der erste Kontaktbereich bei seiner Verformung gegen den zweiten Kontaktbereich, beginnt sich auch das zweite Elastomerband zu verformen und dämpft entsprechend mit. Derart angeordnet, übernimmt das zweite Elastomerband ein Teil der Dämpfung und reduziert auf diese Weise die Verformung des ersten Elastomerbandes. Hierdurch wird das erste Elastomerband weniger beansprucht.

Von besonderem Vorteil ist dabei, wenn der erste Kontaktbereich und der zweite Kontaktbereich in der Ausgangsposition des Wippendämpfers nicht aneinander anliegenden. Dies erlaubt es, den Wippendämpfer zweistufig einzustellen. In einer ersten Dämpfungsphase verformt sich nur der erste Kontaktbereich. Mit zunehmender Verformung wird dessen Dämpfungswirkung stärker. Ab einer gewissen Verformung kommt es zu einem Anliegen des ersten Kontaktbereiches an dem zweiten Elastomerband. Damit einher geht eine stufenweise Erhöhung der Dämpfungswirkung. Sobald der zweite Kontaktbereich sich im Zuge der weiteren Dämpfung ebenfalls verformt, nimmt die Dämpfungswirkung des Wippendämpfers weiter zu. Die zweistufige Dämpfung ermöglicht es, den erfindungsgemäßen Wippendämpfer auf ein breites Stoß-Spektrum abzustimmen. Wird die Wippe nur langsam bewegt, kann der damit einhergehende schwache Stoß nur durch das erste Elastomerband und damit relativ weich gedämpft werden. Wirkt das zweite Elastomerband bei der Dämpfung mit, können auch starke Stöße gedämpft werden, ohne dass der Wippendämpfer auf den Sockel durchschlägt.

In einer bevorzugten Ausführungsform ist der Abstand des ersten Kontaktbereiches zum zweiten Kontaktbereich derart eingestellt, dass der erste Kontaktbereich bei einer Dämpfung an dem zweiten Kontaktbereich zur Anlage kommt, bevor der Wert der Krümmung des ersten Kontaktbereichs im Zuge der Verformung den Wert der ursprünglichen Krümmung mit umgekehrten Vorzeichen erreicht. Hierdurch wird erreicht, dass der Wert der entgegengesetzten Krümmung des ersten Kontaktbereichs den Wert der Krümmung in der Ausgangsposition zumindest nicht wesentlich überschreiten kann. Dies verhindert eine Überanspruchung des ersten Elastomerbandes.

Wenn bei einer Dämpfung der erste Kontaktbereich an dem zweiten Kontaktbereich zur Anlage kommt, sobald oder insbesondere bevor die Krümmung des ersten Kontaktbereichs den Wert null erreicht, wird die Beanspruchung des ersten Elastomerbandes noch weiter verringert.

In einer besonders bevorzugten Ausführungsform weist zumindest ein Elastomerband einen ersten und einen zweiten Endbereich auf, mittels derer es am Sockel befestigt sind, wobei der Abstand zwischen den am Sockel befestigten ersten und zweiten Endbereichen des Elastomerbandes kleiner ist als die Länge des Elastomerbandes. Ist die Wegstrecke zwischen dem ersten und zweiten Endbereich kürzer als die Länge des Elastomerbandes, wird das Elastomerband bei der Befestigung am Sockel in eine gekrümmte Position gezwungen. Es muss somit nicht in gekrümmter Form hergestellt werden, sondern wird erst bei der Montage gebogen. Weist das Elastomerband im Verlauf zwischen den beiden Endbereichen gleichbleibende Materialeigenschaften auf, führt dies in Längsrichtung des Elastomerbandes zu einer zumindest annähernd gleichbleibenden Krümmungsmaß. Die gerade Form des Elastomerbandes ermöglicht eine besonders einfache Fertigung.

Vorteilhafterweise bildet der Sockel eine erste Anlagefläche für eine ersten und/oder eine zweite Anlagefläche für einen zweiten Endbereich aus, wobei die erste und/oder die zweite Anlagefläche in einem Winkel kleiner 150 Grad, vorzugsweise zwischen 90 und 30 Grad, insbesondere zwischen 70 und 50 Grad auseinander laufender Sockel eine erste Anlagefläche für eine ersten und eine zweite Anlagefläche für einen zweiten Endbereich aus, wobei die erste und die zweite Anlagefläche in einem Winkel kleiner 150 Grad, vorzugsweise zwischen 90 und 30 Grad, insbesondere zwischen 70 und 50 Grad auseinander laufen. Indem der oder die Endbereiche angestellt werden, muss der dazwischen liegende Verlauf des Elastomerbandes geringer gekrümmt und damit weniger belastet werden. Von besonderem Vorteil ist eine Anstellung, die eine für die gewünschte Dämpfung geeignete Vorspannung des Elastomerbandes zur Folge hat.

Erfindungsgemäß weist das erste und/oder das zweite Elastomerband eine Mehrzahl von in Längsrichtung verlaufender Rippen auf. Die Rippenform des Elastomerbandes erlaubt dessen kantenlose und damit eine Rissbildung erschwerende Ausbildung. Vorzugsweise werden die einzelnen Rippen mittels Stegen verbunden, sodass die Oberfläche in Querrichtung einen wellenförmigen Verlauf nimmt. Die Verbindungsstege verhindern ein seitliches Ausweichen der Rippen während des Dämpfungsvorgangs.

Insbesondere ist es vorteilhaft, wenn die Rippen des ersten Elastomerbandes die Rippen des zweiten Elastomerbandes überdecken, so dass bei einem Kontakt die Rippen des ersten Elastomerbandes an den Rippen des zweiten Elastomerbandes zur Anlage kommen. Dies führt zu einer geringeren Belastung der im Vergleich mit den Rippen dünner ausgebildeten Stege.

In einer bevorzugten Ausführungsform weisen die Endbereiche des Elastomerbandes eine Stärke auf, die zumindest der Stärke der Rippen entspricht. Der gleichmäßige Übergang zwischen den Endbereichen und den Rippen erschwert eine Rissbildung in diesem Bereich.

Von besonderem Vorteil ist es, wenn ein Endbereich einen vorzugsweise vollständig vom Elastomer ummantelten Einleger aufweist, welcher quer im Band angeordnet ist. Ein solcher, vorzugsweise aus einem festen Material, insbesondere aus Metall, gefertigte Einleger verstärkt die Endbereiche des Elastomerbandes und lässt sich dazu nutzen, die Befestigung des Elastomerbandes an dem Sockel zu verbessern.

Vorzugsweise werden das erste und das zweite Elastomerband mit demselben Befestigungsmittel am Sockel befestigt. Auf diese Weise können das erste und das zweite Elastomerband in einem Arbeitsschritt gemeinsam an dem Sockel befestigt werden.

Aufgrund seiner gummielastischen Eigenschaften und der langen Haltbarkeit hat sich EPDM als besonders geeignetes Material für das erste und/oder das zweite Elastomerband herausgestellt. Insofern ist es von Vorteil, wenn zumindest der Kontaktbereich des Elastomerbandes, insbesondere der Bereich zwischen den beiden Endbereichen des Elastomerbandes zumindest größtenteils aus EPDM besteht. Vorzugsweise sind diese Bereiche des Elastomerbandes aus demselben Material gefertigt. Hierdurch wird ein einseitiger Abrieb der Oberfläche verhindert.

Eine bevorzugte Ausgestaltung des erfindungsgemäßen Wippendämpfers wird anhand der folgenden Figuren näher beschrieben. Dabei zeigen:
Figuren 1-3: Ein erstes Elastomerband und
Figuren 4-7: einen Wippendämpfer mit ersten und zweiten Elastomerband, wobei die
Figur 7 einen Schnitt entlang der Linie BB aus Figur 5 zeigt.

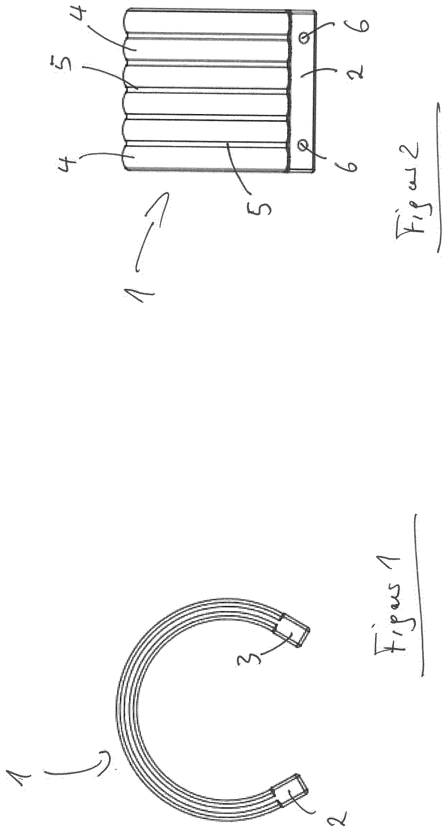

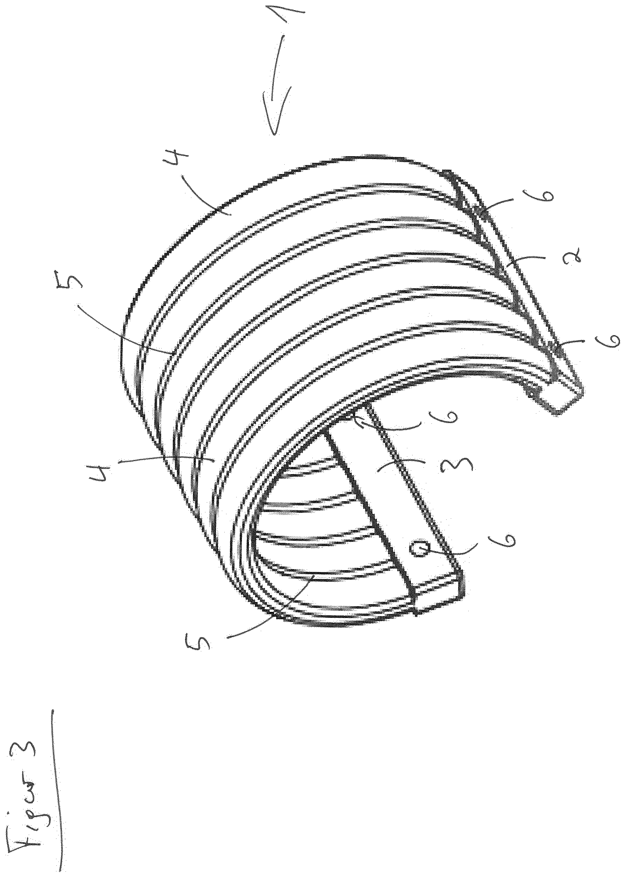

Die Figuren 1 bis 3 zeigen ein erstes, im Ursprungszustand rechteckartig ausgebildetes Elastomerband 1 in der Art, wie es gekrümmt in einem hier nicht gezeigten Wippendämpfer eingespannt wäre. Dabei zeigen Figur 1 und 2 das Elastomerband in zueinander um 90 Grad gedrehter Position, die Figur 3 zeigt eine Perspektive. Zwischen zwei das Elastomerband in Längsrichtung begrenzenden Endbereichen 2 und 3 verlaufen eine Mehrzahl von nebeneinander angeordnete erste Rippen 4, die über Verbindungstege 5 miteinander verbunden sind. Die ersten Rippen 4 verlaufen durchgehend gekrümmt und sind vorzugsweise kreisbogenförmig ausgebildet, weisen also entlang ihres Verlaufs ein gleichbleibendes Krümmungsmaß auf.

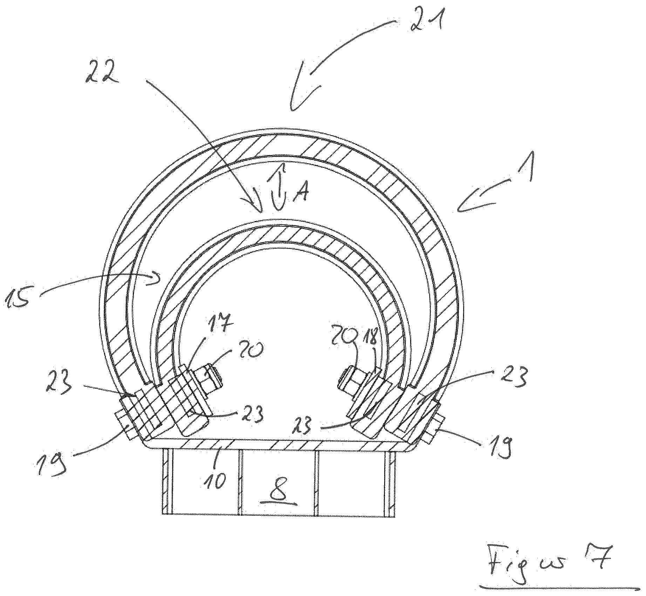

Die Endbereiche 2 und 3 weisen zwei die Endbereiche 2 und 3 jeweils senkrecht durchlaufende Bohrungen 6 auf, die zur Befestigung des ersten Elastomerbandes 1 am Sockel genutzt werden. Die Bohrungen 6 durchlaufen nur in der Schnittdarstellung gemäß Figur 7 gezeigte Einleger 23, welche die Endbereiche 2 und 3 verstärken. Die Endbereiche 2 und 3 weisen zumindest annähernd die selbe Dicke auf wie die im Ausführungsbeispiel gezeigten sechs Rippen 4.

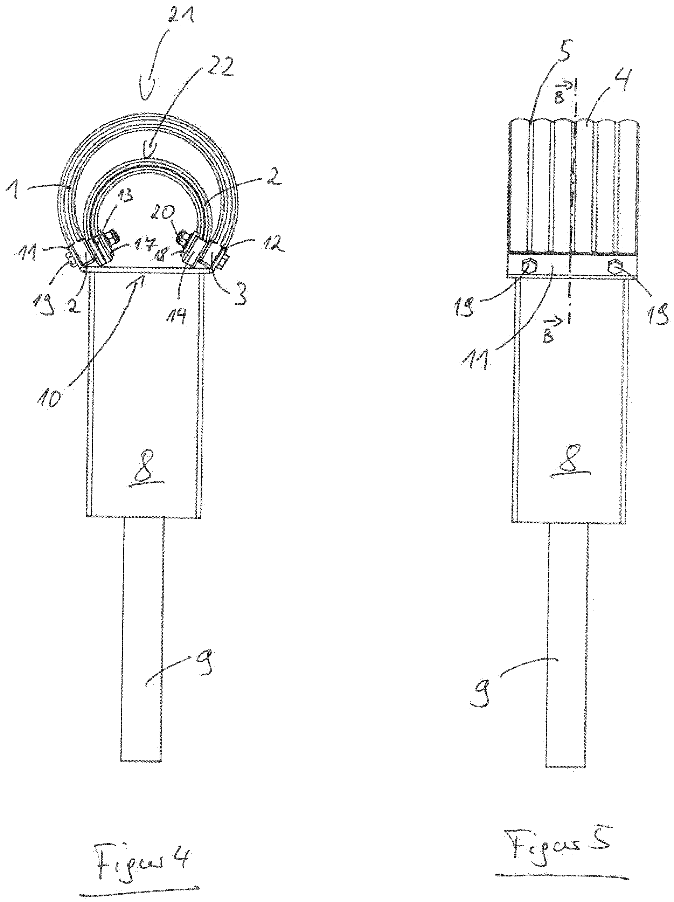

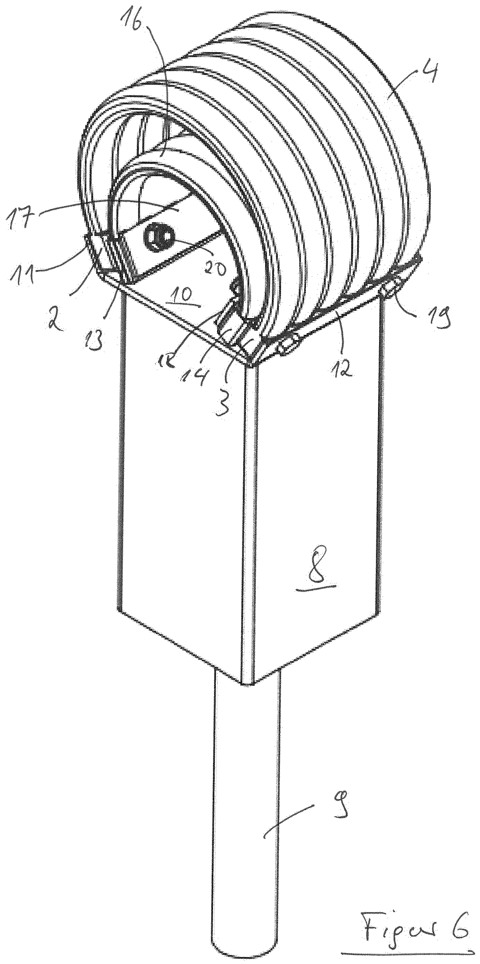

Die Figuren 4-7 zeigen einen zusammengebauten Wippendämpfer 7, aufweisend einen Sockel 8 mit einem Bodenanker 9. An der Oberseite des Sockels 8 ist ein Halteplatte 10 befestigt, insbesondere verschweißt. Vor allem in der Schnittdarstellung gemäß Figur 7 ist gut zu erkennen, dass die Halteplatte 10 an einander gegenüberliegenden Seiten eine angestellte Anlagefläche 11 und 12 aufweist.

Die an der Halteplatte 10 angewinkelten Anlageflächen 11 und 12 sind in Bezug auf die zumindest annähernd parallel zu einem hier nicht gezeigten Untergrund verlaufende Halteplatte 10 mit unterschiedlichen Vorzeichen um jeweils 60 Grad gekippt. Die Anlageflächen 11 und 12 bilden eine gerade Fläche aus, an denen ein Endbereich 2 oder 3 des ersten Elastomerbandes 1 zur Anlage kommt. Indem die Endbereiche 2 bzw. 3 an der Innenseite der Anlageflächen 11 bzw. 12 zur Anlage kommen, sind sie gut gegen eine Beschädigung geschützt.

An der der Anlagefläche 11 oder 12 abgewandten Seite der Endbereiche 2 und 3 kommen jeweils ein Endbereich 13 oder 14 eines zweiten Elastomerbandes 15 zur Anlage, dessen Bereich zwischen den Endbereichen 13 und 14 kürzer ist als der des ersten Elastomerband 1. Der Bereich des zweiten Elastomerbandes 15 zwischen den Endbereichen 13 und 14 ist somit stärker gekrümmt als der vergleichbare Bereich des ersten Elastomerbandes 1. Ansonsten entsprechen die weiteren Eigenschaften vorzugsweise denen des ersten Elastomerbandes 1.

An dem von der jeweiligen Anlageflächen 11 oder 12 abgewandten Seite der Endbereiche 13 oder 14 ist jeweils eine Platte 17 bzw. 18 angelegt. Die Platten 17, 18 und die Anlageflächen 13, 14 weisen mit den Bohrungen 2 korrespondierende Löcher auf. Werden Schrauben oder Gewindebolzen 19 durch die Löcher und Bohrungen 2 geführt, können die Platten 17 bzw. 18 mit den Anlagefläche 11 bzw. 12 mit den die Bohrungen durchlaufenden Schrauben oder Gewindebolzen 19 versehen werden, könne die zwischen den Platten 17 bzw. 18 und den Anlagefläche 11 bzw. 12 liegenden Endbereiche 2, 13 bzw. 3, 14 des ersten 1 und zweiten 15 Elastomerbandes durch das Aufschrauben einer Mutter 20 sowohl kraft- wie auch formschlüssig an dem Sockel 8 befestigt werden.

Zwischen den ersten 1 und zweiten 15 Elastomerband bildet sich auf diese Weise ein Abstand A, mit dem der erste Kontaktbereich 21, an dem die Wippe zur Anlage kommt von dem zweiten Kontaktbereich 22, an dem der erste Kontaktbereich während der Dämpfung zur Anlage kommt, beabstandet ist.

## Patentansprüche

1. Wippendämpfer, aufweisend einen Sockel (8) und ein erstes Elastomer-Band, wobei das erste Elastomerband (1) an dem Sockel (8) befestigt ist, wobei das erste Elastomerband (1) in Längsrichtung gekrümmt verläuft, so dass es einen vom Sockel (8) abstehenden ersten Kontaktbereich (21) ausbildet,
**dadurch gekennzeichnet,**
**dass** am Sockel (8) ein zweites Elastomerband (15) befestigt ist, welches in Längsrichtung gekrümmt verläuft, so dass es einen vom Sockel (8) abstehenden zweiten Kontaktbereich (22) ausbildet, wobei das erste Elastomerband (1) das zweite Elastomerband (15) umläuft und wobei das erste (1) und/oder das zweite (15) Elastomerband eine Mehrzahl von in Längsrichtung verlaufender Rippen (4, 16) aufweist.

2. Wippendämpfer nach Anspruch 1,
**dadurch gekennzeichnet,**
**dass** der Abstand des ersten Kontaktbereiches (21) zum zweiten Kontaktbereich (22) derart eingestellt ist, dass der erste Kontaktbereich (21) bei einer Dämpfung an dem zweiten Kontaktbereich (22) zur Anlage kommt, bevor der Wert der Krümmung des ersten Kontaktbereichs im Zuge der Verformung den Wert der ursprünglichen Krümmung mit umgekehrten Vorzeichen erreicht, insbesondere sobald die Krümmung den Wert null erreicht.

3. Wippendämpfer nach Anspruch 1 oder 2,
**dadurch gekennzeichnet,**
**dass** zumindest ein Elastomerband (1, 15) einen ersten (2, 13) und einen zweiten (3, 14) Endbereich aufweisen, mittels derer es am Sockel (8) befestigt sind, wobei der Abstand zwischen dem am Sockel (8) befestigten ersten (2, 13) und zweiten (3, 14) Endbereich des Elastomerbandes (1, 15) kleiner ist als die Länge des Elastomerbandes (1, 15).

4. Wippendämpfer nach einem der vorangegangenen Ansprüche,
**dadurch gekennzeichnet,**
**dass** der Sockel (8) eine erste Anlagefläche (11) für einen ersten Endbereich (2, 15) und/oder eine zweite Anlagefläche (12) für einen zweiten Endbereich (3, 14) ausbildet, wobei die erste und/oder die zweite Anlagefläche (11, 12) in einem Winkel kleiner 150 Grad, vorzugsweise zwischen 90 und 30 Grad, insbesondere zwischen 70 und 50 Grad auseinander laufen.

5. Wippendämpfer nach einem der vorangegangenen Ansprüche,
**dadurch gekennzeichnet,**
**dass** die Rippen (4) des ersten Elastomerbandes (1) die Rippen (16) des zweiten Elastomerbandes (15) überdecken, so dass bei einem Kontakt die Rippen (4) des ersten Elastomerbandes (1) an den Rippen (16) des zweiten Elastomerbandes (15) zur Anlage kommen.

6. Wippendämpfer nach einem der vorangegangenen Ansprüche,
**dadurch gekennzeichnet,**
**dass** Endbereiche (2, 3, 13, 14) des Elastomerbandes (1, 15) eine Stärke aufweisen, die zumindest der Stärke der Rippen (4, 16) entspricht.

7. Wippendämpfer nach einem der vorangegangenen Ansprüche,
**dadurch gekennzeichnet,**
**dass** ein Endbereich (2, 3, 13, 14) einen vorzugsweise vollständig vom Elastomer ummantelten Einleger (23) aufweist, welcher quer im Endbereich (2, 3, 13, 14)angeordnet ist.

8. Wippendämpfer nach einem der vorangegangenen Ansprüche,
**dadurch gekennzeichnet,**
**dass** das erste (1) und das zweite (15) Elastomerband mit demselben Befestigungsmittel (19, 20) am Sockel (8) befestigt werden.

9. Wippendämpfer nach einem der vorangegangenen Ansprüche,
**dadurch gekennzeichnet,**
**dass** das erste (1) und/oder das zweite (15) Elastomerband zumindest größtenteils aus EPDM besteht.

## Claims

1. A rocker damper, having a base (8) and a first elastomer strap, wherein the first elastomer strap (1) is fastened to the base (8), wherein the first elastomer strap (1) runs in a curved manner in the longitudinal direction such that it forms a first contact region (21) which projects from the base (8),
**characterized in**
**that** a second elastomer strap (15) is fastened to the base (8), which second elastomer strap runs in a curved manner in the longitudinal direction such that it forms a second contact region (22) which projects from the base (8), wherein the first elastomer strap (1) runs around the second elastomer strap (15), and wherein the first (1) and/or the second (15) elastomer strap has a plurality of ribs (4, 16) running in the longitudinal direction.

2. The rocker damper according to claim 1,
**characterized in**
**that** the distance between the first contact region (21) and the second contact region (22) is set in such a manner that in the event of damping, the first contact region (21) comes to rest against the second contact region (22) before the value of the curvature of the first contact region reaches the value of the original curvature with reversed sign in the course of the deformation, in particular as soon as the curvature reaches the value zero.

3. The rocker damper according to claim 1 or 2,
**characterized in**
**that** at least one elastomer strap (1, 15) has a first (2, 13) and a second (3, 14) end region by means of which it is fastened to the base (8), wherein the distance between the first (2, 13) and second (3, 14) end portions of the elastomer strap (1, 15) fastened to the base (8) is smaller than the length of the elastomer strap (1, 15).

4. The rocker damper according to any one of the preceding claims,
**characterized in**
**that** the base (8) forms a first contact surface (11) for a first end region (2, 15) and/or a second contact surface (12) for a second end region (3, 14), wherein the first and/or the second contact surface (11, 12) diverge at an angle of less than 150 degrees, preferably between 90 and 30 degrees, in particular between 70 and 50 degrees.

5. The rocker damper according to any one of the preceding claims,
**characterized in**
**that** the ribs (4) of the first elastomer strap (1) overlap the ribs (16) of the second elastomer strap (15) such that in the event of contact, the ribs (4) of the first elastomer strap (1) come to rest against the ribs (16) of the second elastomer strap (15).

6. The rocker damper according to any one of the preceding claims,
**characterized in**
**that** end regions (2, 3, 13, 14) of the elastomer strap (1, 15) have a thickness which corresponds at least to the thickness of the ribs (4, 16).

7. The rocker damper according to any one of the preceding claims,
**characterized in**
**that** an end region (2, 3, 13, 14) has an insert (23) which is preferably completely encased by the elastomer and is arranged transversely in the end region (2, 3, 13, 14).

8. The rocker damper according to any one of the preceding claims,
**characterized in**
**that** the first (1) and the second (15) elastomer strap are fastened to the base (8) by the same fastening means (19, 20).

9. The rocker damper according to any one of the preceding claims,
**characterized in**
**that** the first (1) and/or the second (15) elastomer strap consists at least largely of EPDM.

## Revendications

1. Amortisseur de balançoire comportant un socle (8) et une première bande d'élastomère, sachant que la première bande d'élastomère (1) est fixée au socle (8), sachant que la première bande d'élastomère (1) passe de façon courbée dans la direction longitudinale de telle manière qu'elle constitue une zone de contact (21) s'écartant du socle (8)
**caractérisé en ce qu'**
une deuxième bande d'élastomère (15) est fixée au socle (8), laquelle passe de façon courbée dans la direction longitudinale de telle manière qu'elle constitue une deuxième zone de contact (22) s'écartant du socle (8), sachant que la première bande d'élastomère (1) entoure la deuxième bande d'élastomère (15) et sachant que la première (1) et/ou la deuxième (15) bande d'élastomère comporte une pluralité de nervures (4, 16) passant en direction longitudinale.

2. Amortisseur de balançoire selon la revendication 1,
**caractérisé en ce que**
la distance entre la première zone de contact (21) et la deuxième zone de contact (22) est ajustée de telle façon que la première zone de contact (21) vient en contact sur la deuxième zone de contact (22) lors d'un amortissement avant que la valeur de la courbure de la première zone de contact n'atteigne, au cours de la déformation, la valeur de la courbure originale avec un signe inverse, en particulier dès que la courbure atteint la valeur zéro.

3. Amortisseur de balançoire selon la revendication 1 ou 2,
**caractérisé en ce qu'**
au moins une bande d'élastomère (1, 15) comporte une première (2, 13) et une deuxième (3, 14) zone d'extrémité au moyen desquelles elles sont fixées au socle (8), sachant que la distance entre la première zone d'extrémité (2, 13) fixée au socle (8) et la deuxième zone d'extrémité (3, 14) de la bande d'élastomère (1, 15) est plus faible que la longueur de la bande d'élastomère (1, 15).

4. Amortisseur de balançoire selon l'une quelconque des revendications précédentes,
**caractérisé en ce que**
le socle (8) constitue une première surface d'applique (11) pour une première zone d'extrémité (2, 15) et/ou une deuxième surface d'applique (12) pour une deuxième zone d'extrémité (3, 14), sachant que la première et/ou la deuxième surface d'applique (11, 12) passent dans un angle inférieur à 150 degrés, de préférence entre 90 et 30 degrés, en particulier entre 70 et 50 degrés l'une par rapport à l'autre.

5. Amortisseur de balançoire selon l'une quelconque des revendications précédentes,
**caractérisé en ce que**
les nervures (4) de la première bande d'élastomère (1) recouvrent les nervures (16) de la deuxième bande d'élastomère (15) de telle manière que lors d'un contact, les nervures (4) de la première bande d'élastomère (1) viennent en applique sur les nervures (16) de la deuxième bande d'élastomère (15).

6. Amortisseur de balançoire selon l'une quelconque des revendications précédentes,
**caractérisé en ce que**
les zones d'extrémité (2, 3, 13, 14) de la bande d'élastomère (1, 15) comportent une épaisseur, qui correspond au moins à l'épaisseur des nervures (4, 16).

7. Amortisseur de balançoire selon l'une quelconque des revendications précédentes,
**caractérisé en ce qu'**
une zone d'extrémité (2, 3, 13, 14) comporte un intercalaire (23) de préférence complètement enveloppé d'élastomère, lequel est disposé transversalement dans la zone d'extrémité (2, 3, 13, 14).

8. Amortisseur de balançoire selon l'une quelconque des revendications précédentes,
**caractérisé en ce que**
la première (1) et la deuxième (15) bande d'élastomère sont fixées au socle (8) avec le même moyen de fixation (19, 20).

9. Amortisseur de balançoire selon l'une quelconque des revendications précédentes,
**caractérisé en ce que**
la première (1) et/ou la deuxième (15) bande d'élastomère sont au moins en grande partie composées d'éthylène-propylène-diène-monomère (EPDM).
